# EUROPÄISCHE PATENTSCHRIFT

(11) **EP 0 716 014 B1**
(45) Veröffentlichungstag und Bekanntmachung des Hinweises auf die Patenterteilung: **29.04.1998**
(21) Anmeldenummer: 95118259.1
(22) Anmeldetag: 21.11.1995
(51) Int. Cl.: B64D 11/00, H02G 3/12

(54) **Abdeckplatte mit Längenausgleich**
Cover with longitudinal positioning
Couvercle avec réglage longitudinal

(30) Priorität: 06.12.1994 DE 4443395; 29.09.1995 DE 19536372
(43) Veröffentlichungstag der Anmeldung: 12.06.1996
(73) Patentinhaber: DRÄGERWERK AKTIENGESELLSCHAFT, 23542 Lübeck (DE)
(72) Erfinder: Roeper, Dieter, D-89077 Ulm (DE)

(56) Entgegenhaltungen:
- DE-A- 2 309 848
- FR-A- 2 390 073
- US-A- 4 909 247

## Beschreibung

Die Erfindung betrifft mit gastechnischen und elektrischen Komponenten versehene Abdeckplatten zum Verschluß von Installationskanälen in der Innenausstattung von Räumen, wobei die Abdeckplatten an ihren jeweiligen Stirnseiten aneinanderstoßen.

Eine Versorgungseinheit für elektrische Energie und Druckgase mit einzelnen, übereinanderliegenden Installationskanälen, welche mit segmentartigen Abdeckplatten verschlossen sind, ist aus der DE 23 09 848 bekanntgeworden. Die Abdeckplatten sind mit Steckdosen für elektrische Energie und für Druckgase versehen und nehmen teilweise auch Schalter, Ventile und Anzeigeskalen auf. Je nach Erfordernis, werden die entsprechend unterschiedlich konfigurierten Abdeckplatten auf den Installationskanälen in der Weise befestigt, daß die Stirnseiten benachbarter Abdeckplatten aneinanderstoßen.

Nachteilig bei der bekannten Versorgungseinheit ist, daß Längendifferenzen zwischen den Abdeckplatten nicht ausgeglichen werden können. Soll beispielsweise eine an einer Abdeckplatte befindliche Anschlußdose an einer bestimmten Stelle des Installationskanals befestigt werden, kann, da die Position innerhalb der Abdeckplatte nicht veränderbar ist, ein Zwischenraum zu einer benachbarten Abdeckplatte auftreten, welcher mit einer zusätzlichen Ausgleichsplatte verschlossen werden muß. Das Vorhalten von unterschiedlichen Ausgleichsplatten erschwert die Montage der Abdeckplatten und erhöht auf der anderen Seite die Lagerhaltungskosten.

Der Erfindung liegt die Aufgabe zugrunde, eine Vorrichtung der genannten Art derart zu verbessern, daß ein axialer Längenausgleich zwischen zwei benachbarten Abdeckplatten auf einem Installationskanal auf einfache Weise möglich ist.

Die Lösung der Aufgabe erfolgt mit den Merkmalen des Anspruchs 1.

Der Vorteil der Erfindung besteht im wesentlichen darin, daß die Abdeckplatten unterschiedliche, als Nut und Feder zusammenwirkende Stirnseiten besitzen, wobei der Längenausgleich durch Veränderung der Eingriffslängen von Nut und zugehöriger Feder erfolgt. Eine erste Stirnseite einer ersten Abdeckplatte besitzt als Nut eine sich etwa rechteckförmig in die erste Abdeckplatte erstreckende Ausnehmung, die sich auf der dem Installationskanal zugewandten Fläche der Abdeckplatte befindet. Eine zweite Stirnseite einer zweiten Abdeckplatte, welche in Richtung zur ersten Stirnseite der ersten Abdeckplatte weist, ist korrespondierend zur Höhe H und Breite der Ausnehmung der ersten Abdeckplatte ausgeführt, so daß die zweite Stirnseite zungenförmig in die Ausnehmung der ersten Stirnseite eingeführt werden kann. Der Überdeckungsgrad zwischen erster und zweiter Stirnseite ist ein Maß für den vorgenommenen Längenausgleich. Die Länge L der Ausnehmung gibt den maximal möglichen Längenausgleich zwischen zwei benachbarten Abdeckplatten an. Die Abdeckplatten sind zweckmäßigerweise als einstückiges PU-Kunststofformteil ausgeführt. Auf diese Weise ist eine kostengünstige Fertigung in hohen Stückzahlen möglich.

Vorteilhafte Ausgestaltungen der Erfindung sind in den Unteransprüchen angegeben.

In zweckmäßiger Weise sind innerhalb einer Ausnehmung oder auch aller Ausnehmungen zwischen benachbarten Abdeckplatten Distanzstücke vorgesehen, um einen definierten Überdeckungsgrad an den Stirnseiten der Abdeckplatten einzustellen. Die Distanzstücke bilden im wesentlichen einen Anschlag für die zweiten Stirnseiten innerhalb der an den ersten Stirnseiten befindlichen Ausnehmungen. Die Distanzstücke können zusätzlich noch an dem Installationskanal befestigt sein. Auf diese Weise ist es möglich, längsgerichtete Kräfte zwischen benachbarten Abdeckplatten auf den Installationskanal zu übertragen.

In vorteilhafter Weise werden die erfindungsgemäßen Abdeckplatten zum Verschluß von Versorgungskanälen in Flugzeugen, Reisebussen, Zügen und Bahnen eingesetzt, da sie durch ihre Formgebung und Aufbau geeignet sind, Längentoleranzen auszugleichen, ohne daß dadurch eine offensichtlich erkennbare Fuge entsteht. In Flugzeugen kann ein Längenausgleich beispielsweise dann erforderlich sein, wenn die Abdeckplatten auf unterschiedliche Sitz zu Sitz Abstände ausgerichtet werden müssen.

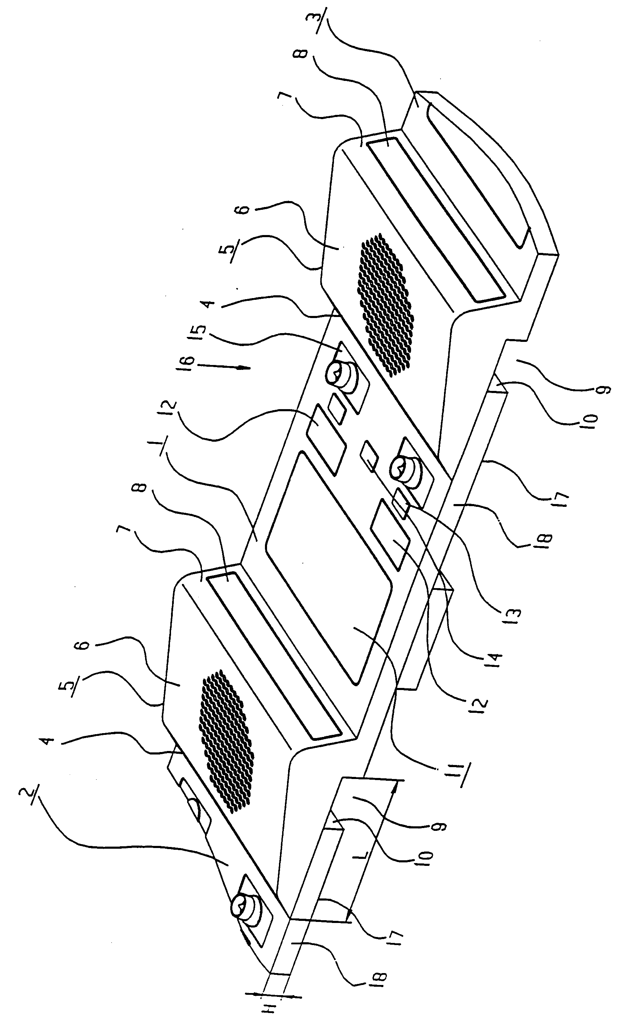

Ein Ausführungsbeispiel der Erfindung ist in der Zeichnung dargestellt und im folgenden näher erläutert:

Die einzige Figur zeigt eine Kombination aus einer ersten Abdeckplatte 1, einer zweiten Abdeckplatte 2 und einer dritten Abdeckplatte 3, welche einen in der Figur nicht dargestellten Installationskanal mit Versorgungsleitungen verschließen. Die Abdeckplatten 1, 2, 3 sind baugleich ausgeführt. Die Abdeckplatte 1 ist in der Figur vollständig, die Abdeckplatten 2 und 3 sind hingegen nur stückweise gezeigt. An einer ersten Stirnseite 4 der ersten Abdeckplatte 1 befindet sich ein dreieckförmiger Aufsatz 5 mit einer ersten Sichtfläche 6 und einer zweiten Sichtfläche 7. Hinter der ersten Sichtfläche 6 ist ein in der Figur nicht dargestellter Lautsprecher und hinter der zweiten Sichtfläche 7 ein Display 8 angebracht. Unterhalb des Aufsatzes 5 ist eine rechteckförmige, zur ersten Stirnseite 4 hin offene Ausnehmung der Höhe H und der Länge L vorgesehen. Eine zweite Stirnseite 10 der zweiten Abdeckplatte 2, welche ebenfalls die Höhe H hat, greift zungenförmig in die Ausnehmung 9 ein. Aufgrund der baugleichen Ausführung der Abdeckplatten 1, 2, 3 ist eine entsprechende Überlappung auch zwischen der zweiten Stirnseite 10 der ersten Abdeckplatte 1 und dem Aufsatz 5 bzw. der Ausnehmung 9 der dritten Abdeckplatte 3 vorhanden, welche benachbart zur ersten Abdeckplatte 1 liegt. Durch Verschieben der zweiten Stirnseiten 10 innerhalb der Ausnehmungen 9 können die Längendifferenzen zwischen den einzelnen Abdeckplatten 1, 2, 3 ausgeglichen werden.

Die erfindungsgemäßen Abdeckplatten 1, 2, 3 werden bevorzugt oberhalb von Passagiersitzen in Flugzeugen eingesetzt. Sie enthalten zusätzlich noch eine öffenbare Notsauerstoffversorgung 11, Leselampen 12, Schalter 13 zur Betätigung der Leselampen 12, eine Personenruftaste 14, sowie Frischluftdüsen 15. Ein Längenversatz zwischen einzelnen Abdeckplatten 1, 2, 3 kann beispielsweise durch unterschiedliche Sitzreihenabstände entstehen. Durch Verschieben der Abdeckplatten 1, 2, 3 gegeneinander innerhalb der Ausnehmungen 9, ist eine einfache Korrektur möglich, ohne daß im Sichtbereich 16 der Abdeckplatten 1, 2, 3 Spalten erkennbar sind. Die Unterseiten 17 der Abdeckplatten 1, 2, 3 liegen auf dem in der Figur nicht dargestellten Installationskanal auf.

Besonders einfach lassen sich die Abdeckplatten 1, 2, 3 aus PU-Schaum fertigen, indem an eine Seite einer rechteckförmigen Grundplatte 18 derStärke H der Aufsatz 5 überkragend angeformt wird.

## Patentansprüche

1. Kombination von zumindestens zwei hintereinanderliegenden, mit gastechnischen und elektrischen Komponenten versehenen Abdeckplatten (1, 2, 3) zum Verschluß von Installationskanälen in der Innenausstattung von Räumen, wobei die Abdeckplatten (1, 2, 3) an ihren jeweiligen Stirnseiten (4, 10) aneinanderstoßen, dadurch gekennzeichnet, daß eine erste Stirnseite (4) einer ersten Abdeckplatte (1) im Bereich der dem Installationskanal zugewandten Fläche (17) eine absatzartige, sich etwa rechteckförmig in die erste Abdeckplatte (1) erstreckende Ausnehmung (9) der Höhe H aufweist und daß eine zweite Stirnseite (10) einer zweiten Abdeckplatte (2), welche auf die erste Stirnseite (4) der ersten Abdeckplatte (1) gerichtet ist, korrespondierend zur Höhe H der Ausnehmung (9) derart ausgebildet ist, daß sie in die Ausnehmung (9) in einer Längentoleranzen zwischen den Abdeckplatten (1, 2) ausgleichenden Weise einführbar ist.

2. Kombination nach Anspruch 1, dadurch gekennzeichnet, daß zumindestens in einer Ausnehmung (9) ein den Überdeckungsgrad zwischen der ersten Stirnseite (4) und der zeiten Stirnseite (10) auf einen vorbestimmten Wert einstellendes Distanzstück vorgesehen ist.

3. Kombination nach Anspruch 2, dadurch gekennzeichnet, daß das Distanzstück an dem Installationskanal befestigt ist.

4. Kombination nach einem der Ansprüche 1 - 3, dadurch gekennzeichnet, daß die Abdeckplatten (1, 2, 3) im Bereich der ersten Stirnseiten (4) als ein dreieckförmiger Aufsatz (5) mit zwei winklig zueinander stehenden Sichtflächen (6, 7) ausgeführt ist, wobei hinter einer ersten Sichtfläche (6) ein Lautsprecher befestigt ist.

5. Kombination nach Anspruch 4, dadurch gekennzeichnet, daß hinter einer zweiten Sichtfläche (7) des Aufsatzes (5) ein Display (8) angebracht ist.

6. Kombination nach einem der Ansprüche 1 bis 5, dadurch gekennzeichnet, daß an den Abdeckplatten (1, 2, 3) eine zum Raum hin öffenbare Notsauerstoffversorgungseinheit (11) angebracht ist.

7. Kombination nach einem der Ansprüche 1 bis 6, dadurch gekennzeichnet, daß an den Abdeckplatten (1, 2, 3) Leselampen (12), die Leselampen ein- und ausschaltende Schalter (13), schwenkbare Frischluftdüsen (15) und eine Personenruftaste (14) angebracht sind.

8. Kombination nach einem der Ansprüche 4 bis 7, dadurch gekennzeichnet, daß die Reihenfolge der Funktionseinheiten auf den Abdeckplatten (1, 2, 3) Laufsprecher, Display (8), Leselampen (12), Schalter (13) und Frischluftdüsen (15) ist.

9. Verwendung einer Kombination nach einem der Ansprüche 1 bis 8 in der Innenausstattung von Flugzeugen, Bahnen, Zügen und Schwebefahrzeugen.

## Claims

1. Combination of at least two cover plates (1, 2, 3), which lie one behind the other and are provided with gas-engineering-related and electrical components, for closing off installation channels in the interior furnishing of rooms, the cover plates (1, 2, 3) abutting at their respective end faces (4, 10), characterised in that a first end face (4) of a first cover plate (1) has, in the region of the surface (17) which faces the installation channel, a step-like recess (9) which extends in a substantially rectangular manner into the first cover plate (1) and has the height H, and in that a second end face (10) of a second cover plate (2), which end face is directed towards the first end face (4) of the first cover plate (1), is constructed so as to correspond to the height H of the recess (9), in such a way that it can be inserted into the recess (9) in a manner which compensates for longitudinal tolerances between the cover plates (1, 2, 3).

2. Combination according to claim 1, characterised in that provided at least in one recess (9) is a spacer, which adjusts the degree of overlap between the first end face (4) and the second end face (10) to a predetermined value.

3. Combination according to claim 2, characterised in that the spacer is fastened to the installation channel.

4. Combination according to one of the claims 1 to 3, characterised in that in the region of the first end faces (4), the cover plates (1, 2, 3) is constructed as a triangular attachment (5) having two visible surfaces (6, 7) which are at an angle to each other, with a loud-speaker being fastened behind the first visible surface (6).

5. Combination according to claim 4, characterised in that mounted behind a second visible surface (7) of the attachment (5) is a display (8).

6. Combination according to one of the claims 1 to 5, characterised in that mounted on the cover plates (1, 2, 3) is an emergency oxygen supply unit (11) which is openable into the room.

7. Combination according to one of the claims 1 to 6, characterised in that mounted on the cover plates (1, 2, 3) are reading lamps (12), switches (13) for turning the reading lamps on and off, pivotable fresh-air nozzles (15) and a staff-calling button (14).

8. Combination according to one of the claims 4 to 7, characterised in that the sequence of the functional units on the cover plates (1, 2, 3) is loud-speaker, display (8), reading lamps (12), switches (13) and fresh-air nozzles (15).

9. Use of a combination according to one of the claims 1 to 8 in the interior furnishing of aircraft, trams, trains and hovercraft.

## Revendications

1. Combinaison d'au moins deux plaques de recouvrement (1, 2, 3) placées les unes derrière les autres, équipées de composants pour installations d'acheminement de gaz ou électriques, destinées à fermer des gaines lors de l'aménagement d'espaces, les plaques de recouvrement (1, 2, 3) étant contiguës au niveau de leurs faces frontales (4, 10), caractérisée en ce qu'une première face frontale (4) d'une première plaque de recouvrement (1) présente, dans la zone de la surface (17) orientée en direction de la gaine, un évidement (9) de hauteur H s'étendant, selon une forme approximativement rectangulaire, dans la première plaque de recouvrement (1), et en ce qu'une deuxième face frontale (10) d'une deuxième plaque de recouvrement (2), orientée en direction de la première face frontale (4) de la première plaque de recouvrement (1), de hauteur H correspondant à celle de l'évidement (9), présente une forme telle qu'elle soit susceptible d'être introduite dans l'évidement (9) pour compenser les différences de longueur entre les plaques de recouvrement (1, 2).

2. Combinaison selon la revendication 1, caractérisée en ce qu'est prévue, au moins dans un évidement (9), une pièce d'espacement réglant à une valeur prédéterminée le degré de recouvrement entre la première face frontale (4) et la deuxième face frontale (10).

3. Combinaison selon la revendication 2, caractérisée en ce que la pièce d'espacement est fixée sur la gaine.

4. Combinaison selon l'une des revendications 1 à 3, caractérisée en ce que les plaques de recouvrement (1, 2, 3) sont conformées, dans la zone des premières faces frontales (4), en garniture (5) triangulaire, avec deux faces visibles (6, 7) formant un angle entre elles, un haut-parleur étant fixé derrière une première face visible (6).

5. Combinaison selon la revendication 4, caractérisée en ce qu'un dispositif d'affichage (8) est disposé derrière une deuxième face visible (7) de la garniture (5).

6. Combinaison selon l'une des revendications 1 à 5, caractérisée en ce qu'une unité d'alimentation en oxygène de secours (11), susceptible d'être ouverte en direction de la pièce, est montée sur les plaques de recouvrement (1, 2, 3).

7. Combinaison selon l'une des revendications 1 à 6, caractérisée en ce que des lampes de lecture (12), des interrupteurs (13) activant ou désactivant les lampes de lecture, des buses orientables diffusant de l'air frais (15) et une touche (14) d'appel du personnel de service, sont montés sur les plaques de recouvrement (1, 2, 3).

8. Combinaison selon l'une des revendications 4 à 7, caractérisée en ce que les équipements présents sur les plaques de recouvrement (1, 2, 3) se suivent dans l'ordre suivant : haut-parleur, dispositif d'affichage (8), lampes de lecture (12), interrupteur (13) et buses diffusant de l'air frais (15).

9. Utilisation d'une combinaison selon les revendications 1 à 8 dans l'aménagement d'avions, de rames, de trains et d'aéroglisseurs.
